**Europäisches Patentamt**

**European Patent Office**

**Office européen des brevets**

(19)

(11) Numéro de publication: **0 185 400**
**B1**

(12) # FASCICULE DE BREVET EUROPÉEN

(45) Date de publication du fascicule du brevet:
12.07.89

(51) Int. Cl.⁴: **A 61 C 1/08,** A 61 C 1/18

(21) Numéro de dépôt: **85201755.7**

(22) Date de dépôt: **29.10.85**

(54) **Dispositif de réduction ou multiplication de vitesse d'une pièce à main dentaire.**

(30) Priorité: **07.11.84 FR 8417335**

(43) Date de publication de la demande:
**25.06.86 Bulletin 86/26**

(45) Mention de la délivrance du brevet:
**12.07.89 Bulletin 89/28**

(84) Etats contractants désignés:
**AT CH DE IT LI SE**

(56) Documents cité:
**EP-A-0 012 872**
**CH-A-93 052**
**CH-A-138 527**
**DE-C-853 992**
**FR-A-1 376 726**
**FR-A-1 575 113**
**FR-A-2 510 392**
**US-A-3 661 026**
**US-A-4 068 536**
**US-A-4 321 041**

(73) Titulaire: **MICRO- MEGA S.A., 5-12, rue du Tunnel,**
**F-25006 Besancon (FR)**

(72) Inventeur: **Pernot, Jacques, Chemin de Merey**
**Vieilley, F-25870 Geneuille (FR)**

(74) Mandataire: **Jörchel, Dietrich R.A., c/o BUGNION**
**S.A. Conseils en Propriété Industrielle 10, route**
**de Florissant Case postale 375, CH- 1211 Genève**
**12 Champel (CH)**

EP 0 185 400 B1

LIBER, STOCKHOLM 1989

## Description

La présente invention concerne un dispositif de réduction ou multiplication de vitesse d'une pièce à main dentaire monté entre l'arbre d'entraînement de l'outil et l'arbre moteur.

Les travaux nécessitant la rotation d'instruments pour fraiser, aléser, remplir les canaux, etc. se font à des vitesses variant de 600 tours/minute environ jusqu'à 150 000 tours/minute. La vitesse de rotation des moteurs d'entraînement variant de 4000 à 40 000 tours/minute, il a été nécessaire de concevoir des dispositifs permettant soit la réduction, soit la multiplication de la vitesse de rotation. Dans une demande de brevet parallèle, la déposante a déjà proposé une pièce à main destinée à être utilisée avec des dispositifs de réduction ou de multiplication modulaires interchangeables.

D'autre part, dans la demande de brevet FR-A-2 510 392, la demanderesse a déjà proposé un dispositif pour solidariser dans le corps d'un contre-angle l'ensemble de transmission qui est disposé à l'intérieur d'une douille rendue solidaire du contre-angle par un accrochage à baïonnette.

Par ailleurs, selon le brevet US-A-4 321 041, l'entraînement de l'outil est réalisé par la coopération de deux engrenages hélicoïdaux, l'un formé sur la queue de l'outil, l'autre sur un arbre oblique lui-même muni à son autre extrémité d'une couronne dentée engrènant avec une couronne dentée prévue à l'extrémité antérieure de l'arbre moteur.

La présente invention se propose de créer un dispositif de réduction ou multiplication très compact, d'un encombrement réduit et destiné à être monté facilement dans le manche d'une pièce à main.

Le dispositif de réduction ou multiplication de vitesse selon l'invention se présente sous la forme d'une unité modulaire, ladite unité modulaire étant composée d'un arbre d'entrée coaxial à l'arbre moteur et entraîné par celui-ci et d'un arbre oblique par rapport audit arbre d'entrée et à l'arbre d'entraînement de l'outil, cet arbre oblique étant muni à chacune de ses extrémités d'une roue dentée conique dont l'une engrène avec une roue dentée conique solidaire de l'arbre d'entrée et la seconde avec une roue dentée conique solidaire de l'arbre d'entraînement de l'outil, l'arbre d'entrée étant monté dans un alésage axial d'une douille tandis que l'arbre oblique est monté dans un alésage oblique traversant ladite douille en coupant l'alésage axial et ne dépasse pas la périphérie extérieure de la douille, cette dernière étant destinée à être emboîtée dans le manche de la pièce à main.

Les principaux avantages présentés par ce dispositif sont surtout liés à sa forme modulaire qui permet une grande simplification de sa fabrication. Il suffit en effet, tout en conservant les mêmes éléments de base, d'utiliser des pignons avec des rapports choisis pour obtenir un dispositif soit réducteur, soit multiplicateur.

De plus cette unité modulaire est destinée à être montée d'une manière interchangeable dans la pièce à main dentaire de manière à pouvoir être remplacée par une autre unité modulaire d'un rapport différent, comme cela est décrit dans une demande de brevet parallèle.

D'autres avantages ressortiront de la description faite à titre d'exemple non limitatif d'une forme d'exécution préférentielle du dispositif de réduction ou multiplication, et du dessin annexé dans lequel:

- la figure 1 est une vue en coupe longitudinale du dispositif multiplicateur,
- la figure 2 est une vue schématique d'un contre-angle équipé du dispositif multiplicateur selon la figure 1,
- la figure 3 est une vue schématique d'une pièce à main droite équipée du dispositif multiplicateur selon la figure 1.

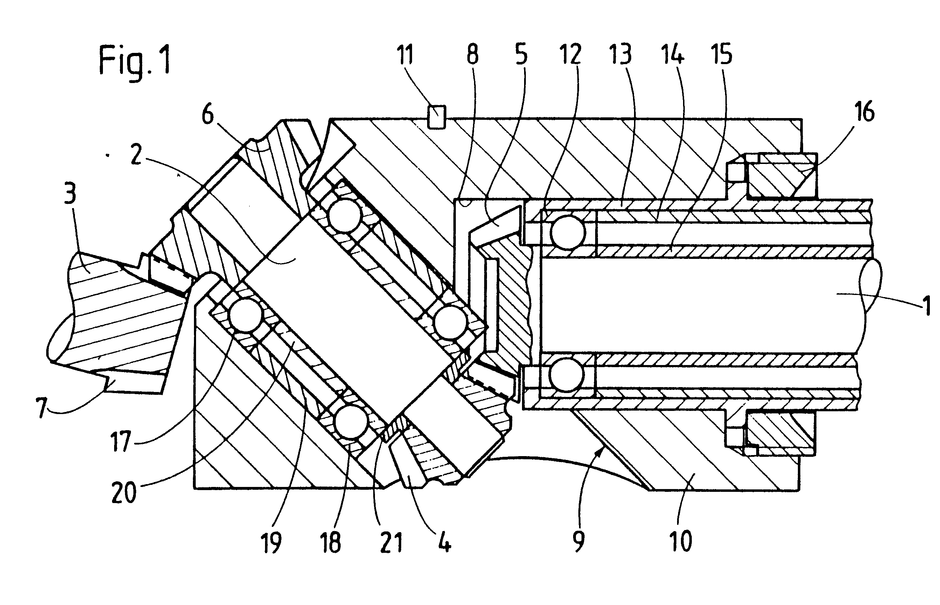

Le dispositif, représenté en coupe longitudinale sur la figure 1, se compose d'un arbre d'entrée 1, coaxial à l'arbre moteur, non représenté, et entraîné par celui-ci par des moyens connus et d'un arbre 2 oblique par rapport à l'arbre d'entrée 1 et à l'arbre d'entraînement de l'outil 3. Cet arbre oblique 2 est muni à chacune de ses extrémités d'une roue dentée conique, l'une 4 engrènant avec une roue dentée conique 5 solidaire de l'arbre d'entrée 1, l'autre 6 avec une roue dentée conique 7 solidaire de l'arbre d'entraînement 3 de l'outil. Ces deux arbres d'entrée 1 et oblique 2 sont montés dans un alésage axial 8, respectivement oblique 9 que présente une douille 10 destinée à être emboîtée dans le manche de la pièce à main. Cette douille 10 est en outre munie de moyens de positionnement dans la pièce à main, constitués par exemple par une clavette 11 prévue pour être insérée dans une fente axiale correspondante du manche de la pièce à main, comme décrit, par exemple, dans une demande de brevet français parallèle. L'alésage oblique 9 coupe l'alésage 8 et débouche de part et d'autre de la douille 10, ce qui facilite le montage des différentes pièces. L'arbre oblique 2 ne dépasse pas la périphérie extérieure de la douille 10.

L'arbre d'entrée 1 est supporté dans l'alésage axial 8 de la douille 10 par deux paliers formés par des roulements à billes dont un seul 12 est représenté sur la figure 1, ces roulements étant logés dans une coupelle porte-roulements 13 formant butée et étant espacés par deux entretoises annulaires 14 et 15. Un bouchon 16 chassé dans la douille 10 assure la fixation de cet arbre 1.

L'arbre oblique 2 repose sur deux paliers 17, 18 formés par des roulements à billes insérés dans l'alésage oblique 9 et espacés par deux entretoises annulaires 19, 20. L'entretoise 19 est chassée dans l'alésage oblique et maintient l'ensemble arbre 2, roulements 17, 18 et pignon 4. Un bouchon 21 chassé sur l'extrémité de l'arbre oblique 2 sert de butée au roulement 18. En variante, l'ensemble arbre 2, roulements 17, 18 et entretoises 19, 20 peut être logé dans un fourreau muni d'une encoche dans laquelle s'insère une plaquette taraudée, elle-même fixée par une vis. En agissant sur la vis on peut ainsi brider l'arbre oblique dans son logement. D'autres moyens de fixation de l'arbre oblique peuvent être envisagés sans sortir du cadre de l'invention.

Selon les rapports des diamètres des pignons on obtient soit une réduction, soit une multiplication.

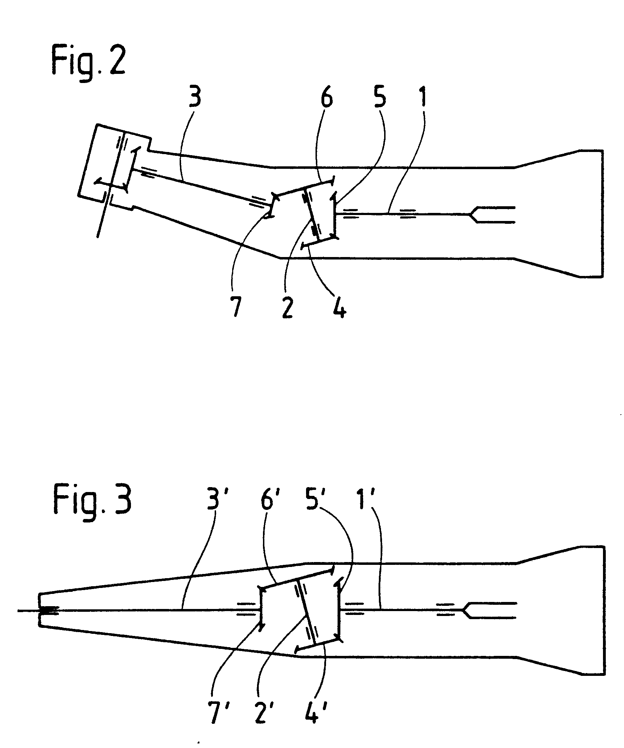

Ce dispositif de réduction ou multiplication peut être utilisé indifféremment soit avec un contre-angle tel que représenté schématiquement figure 2, soit avec une pièce à main droite telle que représentée schématiquement figure 3. Dans le premier cas, l'arbre d'entraînement 3 de l'outil forme un angle d'environ 15° avec l'axe du manche et la partie antérieure oblique de la pièce à main est démontable. Dans le second cas la pièce à main est formée d'une seule pièce et l'arbre d'entraînement 3' de l'outil est coaxial à l'arbre d'entrée 1'. Dans ce cas on retrouve les mêmes éléments d'entraînement 2' à 7' adaptés à la configuration de ce type de pièce à main droite.

Le dispositif décrit construit sous la forme d'une unité modulaire peut donc être facilement monte amoviblement dans le manche d'une pièce à main telle que décrite dans la demande de brevet français parallèle No 8 417 334, cette pièce à main pouvant aussi être équipée de modules différents ayant d'autres rapports de vitesse. Le module qui vient d'être décrit ainsi que les différents autres modules ont un arbre d'entrée adapté à être connecté directement au moteur d'entraînement lorsque celui-ci est accouplé à l'extrémité du manche.

## Revendications

1. Dispositif de réduction ou multiplication de vitesse d'une pièce à main dentaire monté entre l'arbre d'entraînement de l'outil et l'arbre moteur qui se présente sous la forme d'une unité modulaire, ladite unité modulaire étant composée d'un arbre d'entrée (1) coaxial à l'arbre moteur et entraîné par celui-ci et d'un arbre oblique (2) par rapport audit arbre d'entrée et à l'arbre (3) d'entraînement de l'outil, cet arbre oblique (2) étant muni à chacune de ses extrémités d'une roue dentée conique dont l'une (4) engrène avec une roue dentée conique solidaire de l'arbre d'entrée et la seconde (6) avec une roue dentée conique (7) solidaire de l'arbre (3) d'entraînement de l'outil, l'arbre d'entrée (1) étant monté dans un alésage axial (8) d'une douille (10) tandis que l'arbre oblique est monté dans un alésage oblique (9) traversant ladite douille (10) en coupant l'alésage axial (8) et ne dépasse pas la périphérie extérieure de la douille, cette dernière étant destinée à être emboîtée dans le manche de la pièce à main.

2. Dispositif selon la revendication 1, caractérisé par le fait que l'arbre oblique (2) repose sur deux paliers (17, 18) insérés dans ledit alésage oblique (9) et espacés par au moins une entretoise annulaire (19).

## Patentansprüche

1. Vorrichtung zur Geschwindigkeitsuntersetzung oder -übersetzung eines zahnärztlichen Handstücks, welche zwischen der Antriebswelle des Instruments und der Motorwelle montiert und in Form einer modularen Einheit ausgebildet ist, die sich zusammensetzt aus einer koaxial zur Motorwelle orientierten und durch diese angetriebenen Eingangswelle (1) und aus einer in Bezug auf diese Eingangswelle und auf die Antriebswelle (3) des Instruments schrägen Welle (2), die an ihren beiden Enden mit Kegelrädern versehen ist, von denen eines (4) mit einem fest auf der Eingangswelle sitzenden Kegelrad kämmt und das andere (6) mit einem fest auf der Antriebswelle (3) des Instruments sitzenden Kegelrad (7) kämmt, wobei die Eingangswelle (2) in einer axialen Bohrung (8) einer Hülse (10) montiert ist, während die schräge Welle in einer schrägen Bohrung (9) montiert ist, welche die erwähnte Hülse (10) durchquert und dabei die axiale Bohrung (8) schneidet und den äusseren Umfang der Hülse nicht überragt, und wobei diese Hülse dazu bestimmt ist, in den Handgriff des Handstücks eingepasst zu werden.

2. Vorrichtung nach Anspruch 1, dadurch gekennzeichnet, dass die schräge Welle (2) in zwei Lagern (17, 18) ruht, die in die erwähnte schräge Bohrung (9) eingesetzt sind und durch wenigstens ein ringförmiges Abstandsstück (19) im Abstand voneinander gehalten werden.

## Claims

1. Speed-reducing or multiplication device for a dental handpiece which is mounted between the tool driving shaft and the motor shaft, said device having a modular unit structure and comprising an input shaft (1) coaxial to and driven from said motor shaft, and an oblique shaft (2) forming an angle to said input shaft and to the tool driving shaft (3), said oblique shaft (2) being provided at either end with a bevel pinion meshing the one (4) with a bevel wheel fixed to said input shaft and the other (6) with another bevel wheel (7) fixed to the tool driving shaft (3), said input shaft (1) being mounted in an axial bore (8) of a socket (10), said oblique shaft being mounted in an oblique bore (9) passing through said socket (10) whilst intersecting said axial bore (8) and not exceeding the external periphery of said socket, the letter being adapted to be force fitted into the handle of the handpiece.

2. Device according to claim 1, characterized in that said oblique shaft (2) is supported by a pair of bearings (17, 18) inserted in said oblique bore (9) and held at the proper distance by at least one annular distance piece (19).

Fig.1

EP 0 185 400 B1

Fig. 2

Fig. 3